Europäisches Patentamt

European Patent Office

Office européen des brevets

(11) Veröffentlichungsnummer: **0 467 052 A2**

# EUROPÄISCHE PATENTANMELDUNG

(21) Anmeldenummer: **91108618.9**

(22) Anmeldetag: **28.05.91**

(51) Int. Cl.5: **B01D 35/153**

(30) Priorität: **17.07.90 DE 4022626**

(43) Veröffentlichungstag der Anmeldung:
**22.01.92 Patentblatt 92/04**

(84) Benannte Vertragsstaaten:
**AT BE CH DE DK ES FR GB IT LI NL SE**

(71) Anmelder: **A. und K. Müller GmbH & Co. KG**
**Bücherstrasse 31-37**
**W-4000 Düsseldorf 13(DE)**

(72) Erfinder: **Moldenhauer, Hermann**
**Lüdenscheider Strasse 2**
**W-4000 Düsseldorf 12(DE)**
Erfinder: **Riedel, Heinz-Dieter**
**Spohrstrasse 7**
**W-4000 Düsseldorf 13(DE)**

(74) Vertreter: **Feder, Wolf-Dietrich et al**
**Dr. Wolf-D. Feder, Dr. Heinz Feder Dipl.-Ing.**
**P.-C. Sroka Dominikanerstrasse 37**
**W-4000 Düsseldorf 11(DE)**

(54) **Filtereinrichtung mit Drosselvorrichtung.**

(57) Eine Filtereinrichtung mit Drosselvorrichtung zur Einschaltung in eine Wasserzuführungsleitung. Sie besitzt ein Gehäuse (3), dessen Innenraum eine mit dem Einlaß (3.1) verbundene Ventilkammer (4) und eine mit dem Auslaß (3.3) verbundene Siebkammer aufweist. Die beiden Kammern (4, 5) sind über einen Ventilsitz (6) miteinander verbunden, dem ein Ventilteller (7) gegenüberliegt, der von einer Druckfeder (8) in Schließrichtung beaufschlagt ist. Am Ventilteller (7) ist ein Ventilstößel (9) angeordnet, der durch den Ventilsitz (6) und die Siebkammer (5) sowie ein in der Siebkammer (5) angeordnetes Feinsieb (11) hindurchgeführt ist und sich über ein Zwischenstück (11.2) an der Innenseite eines Deckels (10) abstützt, der in Schließrichtung des Ventiltellers (7) vom Gehäuse (3) abschraubbar ist. Bei aufgeschraubtem Deckel (10) wird der Ventilteller (7) in die offene Stellung gedrückt. Wird zum Reinigen des Feinsiebs (11) der Deckel (10) abgeschraubt, so schließt der Ventilteller (7) automatisch und es kann kein Wasser ausströmen. Der becherartig ausgebildete Deckel (10) kann das in der Siebkammer (5) enthaltene Restwasser aufnehmen. Ohne das eingesetzte Feinsieb (11) ist auch bei Aufschrauben des Deckels (10) kein Öffnen des Ventiltellers (7) möglich.

EP 0 467 052 A2

# Fig.1

Die Erfindung betrifft eine Filtereinrichtung mit Drosselvorrichtung zur Einschaltung in eine Wasserzuführungsleitung zu einer Steuervorrichtung, insbesondere einem servogesteuerten Ventil, das einen mit einer Steuerbohrung versehenen Differentialkolben aufweist, mit einem Gehäuse, das je einen an die Wasserzuführungsleitung anschließbaren Einlaß und Auslaß aufweist.

Es ist bekannt, insbesondere im Sanitärbereich, eigenmediumbetätigte, durch Magnetanker gesteuerte Ventile zu verwenden, die einen in einem Ventilgehäuse bewegbar angeordneten, den Ventilteller tragenden Differentialkolben aufweisen, an dessen einer Seite ein mit dem Ventilzufluß verbundener Druckraum angeordnet ist, der über einen dem Ventilteller gegenüberliegenden Ventilsitz mit dem Ventilauslaß verbunden ist und an dessen anderer Seite ein Steuerraum angeordnet ist, der über eine mittig im Differentialkolben angeordnete, durch eine am Magnetanker angeordnete Magnetankerdichtung verschließbare Entlastungsbohrung mit dem Ventilauslaß und über eine außermittig im Differentialkolben angeordnete Steuerbohrung mit dem Druckraum verbunden ist. Derartige servogesteuerte Ventile sind beispielsweise in DE-PS 976 465, DE-PS 1 263 425 und DE-OS 36 42 669 beschrieben.

Derartige Ventile sind wegen des geringen Querschnitts, insbesondere der Steuerbohrung, außerordentlich empfindlich gegen über die Wasserzuführungsleitung mit dem Wasser zugeführte Verunreinigungen, insbesondere Teilchen, deren Durchmesser gleich oder größer ist als der Durchmesser der Steuerbohrung. Es ist daher im allgemeinen notwendig, dem Ventil eine Filtereinrichtung, beispielsweise in Form eines Siebes, vorzuschalten. Eine derartige in die Wasserzuführungsleitung eingeschaltete Filtereinrichtung muß aber von Zeit zu Zeit gereinigt werden. Zu diesem Zweck muß sie geöffnet werden und das Sieb muß herausgenommen werden. Da die Filtereinrichtung vor der Zuführungsseite, beispielsweise des Einlaßventils einer sanitären Einrichtung, angeordnet ist, steht sie ständig unter Wasserdruck, so daß bei ihrem Öffnen das Wasser unter Druck austreten würde. Zu diesem Zweck ist es erforderlich, vor oder an der Filtereinrichtung eine Drosselvorrichtung vorzusehen, mit der zunächst die Zuführungsleitung vor der Filtereinrichtung gesperrt wird bevor diese geöffnet werden kann. Dies bedeutet, daß in die Zuführungsleitung vor dem Ventil mehrere Einzelvorrichtungen eingeschaltet werden müssen. Weiterhin müssen Vorkehrungen getroffen werden, daß nicht etwa die Filtereinrichtung geöffnet wird bevor die Drosselvorrichtung betätigt ist, so daß insgesamt eine Reihe technisch aufwendiger Sicherheitsmaßnahmen vorgesehen werden müssen.

Der Erfindung liegt die Aufgabe zugrunde, eine Filtereinrichtung mit Drosselvorrichtung zu schaffen, bei der in einer möglichst einfach aufgebauten Konstruktion die Filtereinrichtung mit der Drosselvorrichtung derart kombiniert ist, daß eine Fehlbedienung ausgeschlossen wird und beim Öffnen der Filtereinrichtung durch die Drosselvorrichtung automatisch die Wasserzufuhr abgesperrt wird, so daß in keinem Fall ein Wasseraustritt unter Druck erfolgen kann.

Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Filtereinrichtung sind in den Unteransprüchen beschrieben.

Der Grundgedanke der Erfindung besteht darin, in einer einfachen Konstruktion sicherzustellen, daß der Öffnungsmechanismus der Filtereinrichtung zum Herausnehmen des Siebes derart mit einer einen Ventilteller und einen Ventilsitz aufweisenden Drosselvorrichtung kombiniert ist, daß mit dem Abschrauben des Deckels vom Gehäuse die Stützfläche, an welcher sich der den Ventilteller offenhaltende Ventilstößel abstützt, in einer solchen Richtung bewegt wird, daß der Ventilteller sich unter der Einwirkung des Wasserdrucks und einer zusätzlichen Druckfeder in Richtung auf den Ventilsitz bewegt, auf dem er spätestens beim Abnehmen des Deckels vom Gehäuse dicht schließend aufsitzt, so daß kein Wasser aus der Zuführungsleitung unter Druck in den Außenraum einströmen kann. Nach dem Öffnen des Gehäuses kann das Feinsieb herausgenommen und gereinigt oder ausgetauscht werden. Mit dem Wiederaufschrauben des Deckels wird gleichzeitig der Ventilteller wieder vom Ventilsitz abgehoben. Da bei diesen Bewegungen auch Zwischenstellungen möglich sind, kann die Gesamteinrichtung gleichzeitig als Drosselvorrichtung eingesetzt werden.

Bei einer besonders vorteilhaften Ausführungsform (Patentanspruch 2) wird durch die Art der Konstruktion erreicht, daß die Drosselvorrichtung nicht öffnen kann, wenn beispielsweise versehentlich der Deckel wieder aufgeschraubt wird, ohne daß das Feinsieb wieder eingesetzt ist.

Weiterhin hat es sich als besonders vorteilhaft erwiesen, wenn der Deckel des Gehäuses als Becher ausgebildet ist (Patentanspruch 3), der einen solchen Rauminhalt besitzt, daß beim Abschrauben des Deckels sich das gesamte in der Siebkammer noch vorhandene Restwasser innerhalb des Bechers sammelt, so daß auch ein geringer Wasseraustritt vermieden werden kann.

Weiterhin ist es vorteilhaft, wenn im Auslaß des Gehäuses ein Rückschlagventil angeordnet ist, welches verhindert, daß beim Abnehmen des Deckels etwa aus den angeschlossenen Geräten Wasser in entgegengesetzter Richtung ausströmen kann. Im Einlaß des Gehäuses kann ein Großsieb angeordnet sein, um große Verunreinigungen abzuhalten, die unter Umständen mit hoher Geschwindigkeit eingespült werden können und das Feinsieb beschädigen könnten.

Die Ventilkammer kann über einen zweiten abschraubbaren Deckel zugänglich gemacht werden, wobei es vorteilhaft ist, wenn dieser Deckel ein Linksgewinde besitzt, damit keine Verwechslung in der Bedienung der beiden Deckel auftreten kann.

Der Ventilteller der erfindungsgemäßen Filtereinrichtung schließt mit dem Wasserdruck. Es ist daher vorteilhaft, wenn Ventilteller und Ventilsitz so ausgebildet sind (Patentanspruch 7), daß ein schlagartiges Schließen unter der Einwirkung des Wasserdrucks mit der Bildung eines Wasserschlags nicht auftreten kann.

Ein wichtiges Merkmal der erfindungsgemäßen Filtereinrichtung besteht auch darin, daß das zylindrische Feinsieb radial von innen nach außen durchströmt wird, so daß sich die Festkörperteilchen im Innenraum des Feinsiebs sammeln und somit beim Austausch nicht etwa in den Deckel abgeschwemmt werden können, was die Gefahr mit sich brächte, daß sie im Deckel verbleiben und bei der Wiederinbetriebnahme der Einrichtung in die zu schützende Steuervorrichtung eingeschwemmt werden.

Im folgenden wird anhand der beigefügten Zeichnungen ein Ausführungsbeispiel für eine Filtereinrichtung mit Drosselvorrichtung nach der Erfindung näher erläutert.

In den Zeichnungen zeigen:

Fig. 1    in einer Schnittdarstellung eine zwischen ein servogesteuertes Ventil und eine Wasserzuführungsleitung eingeschaltete Filtereinrichtung mit Drosselvorrichtung im Betriebszustand bei vollständig aufgeschraubtem Deckel und geöffnetem Ventilteller;

Fig. 2    die Filtereinrichtung nach Fig. 1 im Betriebszustand bei abgesenktem Deckel und geschlossenem Ventilteller;

Fig. 3    die Filtereinrichtung nach Fig. 1 im Betriebszustand bei ganz abgenommenem Deckel und geschlossenem Ventilteller.

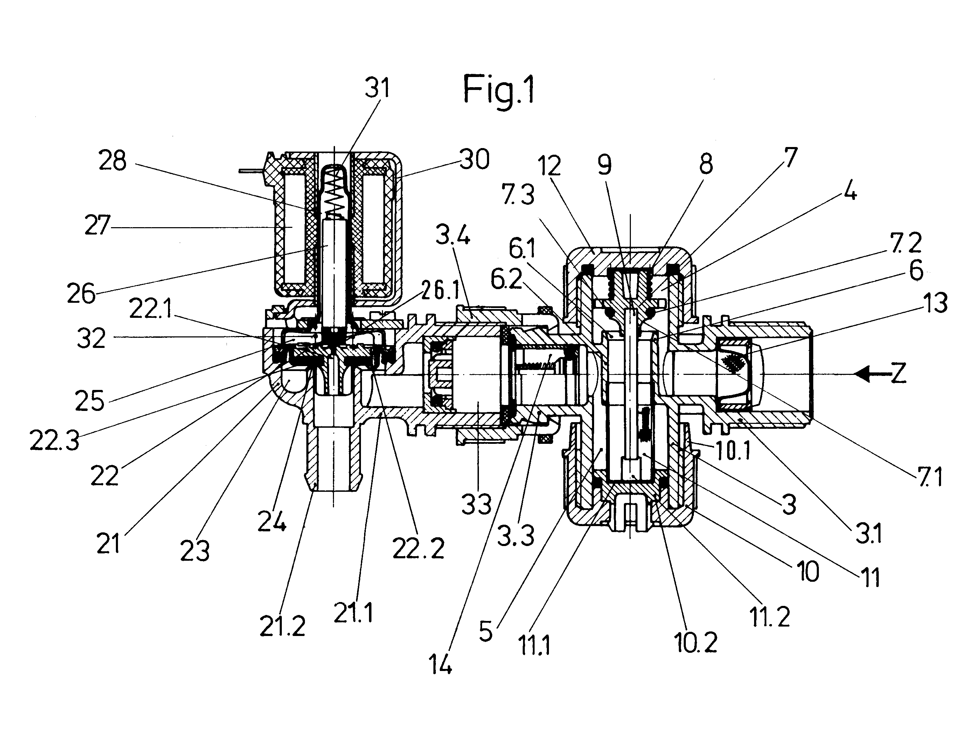

Wie aus Fig. 1 zu entnehmen besitzt die dargestellte Filtereinrichtung ein im wesentlichen zylindrisches Gehäuse 3, das an seiner Mantelfläche einen Einlaß 3.1 aufweist, der an eine nicht dargestellte Wasserzuführungsleitung angeschlossen ist und in welchen Wasser in Pfeilrichtung Z einströmt. Über einen an der Mantelfläche des Gehäuses 3 angeordneten Auslaß 3.3 ist dieses mit mit dem Einlaß 21.1 eines weiter unten näher beschriebenen eigenmediumbetätigten durch Magnetanker gesteuerten Ventils verbunden. Die Verbindung erfolgt mittels einer Überwurfmutter 3.4.

Der Innenraum des Gehäuses 3 ist in zwei Kammern aufgeteilt, und zwar eine mit dem Einlaß 3.1 verbundene Ventilkammer 4 und eine mit dem Auslaß 3.3 verbundene Siebkammer 5. Ventilkammer 4 und Siebkammer 5 sind über einen Ventilsitz 6 miteinander verbunden, dem ein innerhalb der Ventilkammer 4 angeordneter Ventilteller 7 gegenüberliegt. An der im eingebauten Zustand oberen Seite des Gehäuses wird die Ventilkammer 4 durch einen Deckel 12 abgeschlossen, der auf das Gehäuse 3 aufschraubbar ist und ein Linksgewinde besitzt. An der Innenseite des Deckels 12 stützt sich der Ventilteller 7 über eine Schraubendruckfeder 8 ab, durch deren Federkraft der Ventilteller 7 in Schließrichtung beaufschlagt wird. An der dem Ventilsitz 6 zugewandten Seite des Ventiltellers 7 ist ein Ventilstößel 9 befestigt, der koaxial durch den Ventilsitz 6 hindurch in die Siebkammer 5 hineingeführt ist. In der Siebkammer 5 ist koaxial zum Ventilsitz 6 und zum Ventilstößel 9 ein zylindrisch ausgebildetes Feinsieb 11 angeordnet, und zwar so, daß seine dem Ventilsitz 6 zugekehrte, in Fig. 1 obere offene Stirnseite sich über ein Rohrstück 6.2 unmittelbar an den Ventilsitz 6 anschließt. Die vom Ventilsitz 6 abgewandte untere Stirnseite des Feinsiebs 11 ist mittels eines Abschlußelementes 11.1 verschlossen. Dieses Abschlußelement 11.1 weist an seiner dem Ventilsitz 6 und damit dem Stößel 9 zugekehrten Innenseite ein Zwischenstück 11.2 auf, auf welchem das untere Ende des Ventilstößels 9 aufsitzt. Insgesamt ist das Feinsieb 11 mit dem Abschlußelement 11.1 in einem napfartigen Halterungselement 10.2 gehaltert, welches in einem Deckel 10 angeordnet ist, der becherartig ausgebildet ist und auf das Gehäuse 3 aufschraubbar ist, wobei die Seitenwände 10.1 des Deckels 10 das Unterteil des Gehäuses 3 an seiner Außenseite umfassen. Der Deckel 10 ist in dem ihn mit dem Gehäuse 3 verbindenden Rechtsgewinde spielfrei geführt. Wie weiter unten näher erläutert besitzen die Seitenwände 10.1 des Deckels 10 eine solche Höhe, daß der Rauminhalt des durch den Deckel 10 gebildeten Bechers mindestens dem Rauminhalt des Restwassers entspricht, welches sich nach dem Schließen des Ventiltellers 7 noch in der Siebkammer 5 befinden kann.

Im Einlaß 3.1 ist zusätzlich ein Vorfilter 13 zum Abhalten gröberer Feststoffteilchen angeordnet, während im Auslaß 3.3 ein Rückschlagventil 14 angeordnet ist, durch welches verhindert wird, daß beim Öffnen des Gehäuses 3 etwa Wasser aus dem angeschlossenen Ventil in die Siebkammer 5 zurückströmt.

Im folgenden wird das an den Auslaß 3.3 des Gehäuses 3 angeschlossene servogesteuerte Ventil näher erläutert.

Bei dem servogesteuerten Ventil kann es sich beispielsweise um das Einlaßventil eines Haushaltsgerätes, also einer Waschmaschine etc., handeln. Das Ventil möge an der Seitenwand oder Rückwand eines nicht dargestellten Gerätes angeordnet sein.

Das Ventil besitzt ein Ventilgehäuse 21, in dem ein Differentialkolben 22 verschiebbar angeordnet ist, der an seinen Rändern über eine Rollmembran 22.3 mit dem Ventilgehäuse verbunden ist. Der Differentialkolben 22 trägt einen Ventilteller, der in die Rollmembran 22.3 integriert ist und einem Ventilsitz 24 gegenüberliegt. Der Zuflußanschluß 21.1, also der Druckanschluß, mündet in eine ringförmige Druckkammer 23, die über den Ventilsitz 24 mit einem Abflußanschluß 21.2 verbunden ist. Auf der vom Ventilsitz 24 abgewandten Seite des Differentialkolbens 22 ist ein Steuerraum 25 angeordnet, der an einer Seite durch die Oberfläche des Differentialkolbens 22 bzw. durch die Rollmembran 22.3 begrenzt ist, während die anderen Begrenzungen durch Teile des Gehäuses 21 und durch die Innenflächen eines zum Magnetsystem gehörenden Führungsrohres 28 gebildet werden, das an dieser Stelle eine Verbreiterung aufweist.

Im Differentialkolben 22 befindet sich eine mittig angeordnete axiale Entlastungsbohrung 22.1, durch die der Steuerraum 25 mit dem Abflußanschluß 21.2 verbunden ist. Weiterhin weist der Differentialkolben 22 eine außermittig angeordnete axiale Steuerbohrung 22.2 mit kleinem Durchmesser auf, durch die der Steuerraum 25 mit dem Druckraum 23 verbunden ist. Die axiale Entlastungsbohrung 22.1 ist verschließbar durch eine Magnetankerdichtung 26.1, die am äußeren Ende eines Magnetankers 26 angeordnet ist, welcher im Führungsrohr 28 verschiebbar geführt ist.

Das Ventil wird von einem Magnetsystem gesteuert mit einer Magnetspule 27, in deren Längsachse das Führungsrohr 28 angeordnet ist, in welchem der Magnetanker 26 verschiebbar geführt ist. Der Magnetanker 26 stützt sich an der von der Magnetankerdichtung 26.1 abgewandten Seite über eine Rückholfeder 31 ab. Die Magnetspule 27 ist von einem Magnetjoch 30 umfaßt. Im Steuerraum 25 ist zusätzlich eine auf den Differentialkolben 22 in Schließrichtung wirkende Schraubendruckfeder 32 angeordnet.

Im Zuflußanschluß 21.1 ist ein an sich bekannter Durchflußregler 33 vorgesehen.

Die Wirkungsweise des beschriebenen servogesteuerten Ventils ist an sich bekannt und wird nur kurz angedeutet. Das durch den Zuflußanschluß 21.1 unter Druck zuströmende Medium gelangt über den Druckraum 23 und die Steuerbohrung 22.2 in den Steuerraum 25. Die Flächenverhältnisse am Differentialkolben 22 sind so gewählt, daß bei durch die Magnetankerdichtung 26.1 verschlossener Entlastungsbohrung 22.1 der Differentialkolben 22 unter dem Druck des Mediums im Steuerraum 25 nach unten bewegt wird und sich das Ventil durch Aufsetzen des Ventiltellers 22 auf den Ventilsitz 24 schließt. Wird das Magnetsystem erregt und durch Anziehen des Ankers 26 die Entlastungsbohrung 22.1 geöffnet, so tritt ein Druckausgleich zwischen dem Steuerraum 26 und dem Abflußanschluß 21.2 auf und der Differentialkolben 22 hebt sich aufgrund des im Druckraum 23 anstehenden Druckes, so daß sich das Ventil öffnet.

Im folgenden wird die Funktionsweise der oben beschriebenen Filtereinrichtung mit Drosselvorrichtung näher erläutert.

Fig. 1 zeigt die Vorrichtung im Durchflußzustand. Durch den voll aufgeschraubten Deckel 10 wird der Ventilteller 7 über den Stößel 9 gegen die Wirkung der Druckfeder 8 in die Offenstellung gedrückt. Das Wasser strömt durch den Einlaß 3.1, das Vorfilter 13, den Ventilsitz 6, das Feinsieb 11 in die Siebkammer 5 und von dort durch den Auslaß 3.3 in das beschriebene servogesteuerte Ventil 21 bis 31.

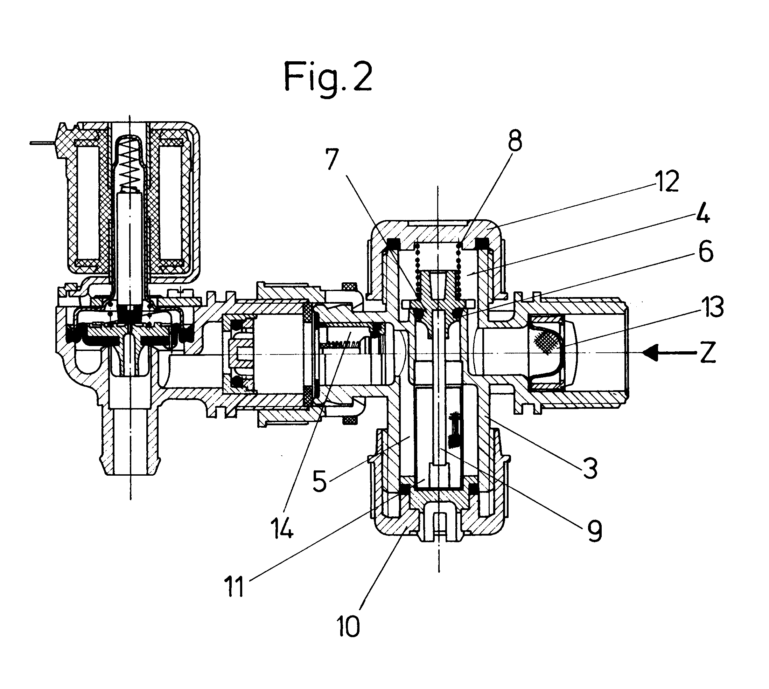

Fig. 2 zeigt die Einrichtung in einem Zustand, in dem der Deckel 10 nach unten geschraubt, aber noch nicht ganz abgenommen ist. Dadurch, daß der Deckel 10 nach unten verlagert ist, liegt der Abstützpunkt für den Ventilstößel 9 tiefer und der Ventilteller 7 hat bereits unter der Wirkung der Druckfeder 8 und des Mediumsdruckes auf den Ventilsitz 6 aufgesetzt. Selbstverständlich sind zwischen den Stellungen nach Fig. 1 und Fig. 2 Zwischenstellungen möglich, in denen der Ventilteller 7 den Durchfluß noch teilweise freigibt.

Um ein schlagartiges Schließen und damit einen auftretenden Wasserschlag zu vermeiden, ist der Ventilteller 7 in einer besonderen Weise ausgebildet. Er weist keine Dichtungsplatte auf, die sich unter dem Mediumsdruck schlagartig nach unten bewegen könnte, sondern er besitzt eine sich in Richtung auf den Ventilsitz 6 hin konisch verjüngende Dichtungsfläche 7.1 mit einer Umfangsnut 7.2, in welche ein O-Ring 7.3 spielfrei eingelegt ist. Der Ventilsitz 6 selbst besitzt eine entsprechend geformte konische Dichtungsfläche 6.1.. Weiterhin ist das Gewinde zwischen dem Deckel 10 und dem Gehäuse 3 so ausgeführt, daß der Deckel 10 spielfrei geführt ist.

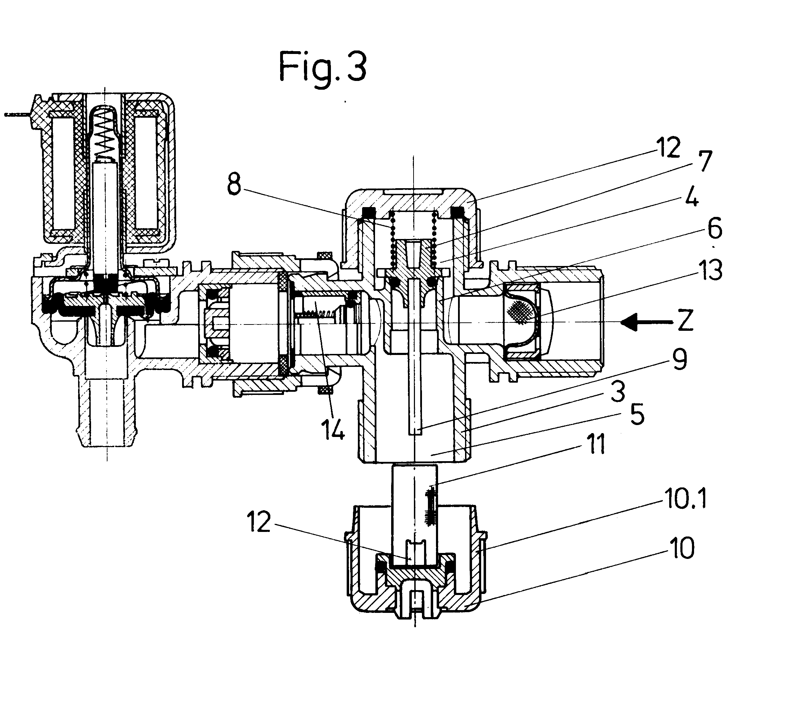

Fig. 3 zeigt den Zustand, in dem der Deckel 10 zusammen mit dem Feinsieb 11 ganz abgenommen ist. Der Ventilteller 7 sitzt fest auf dem Ventilsitz 6 auf, so daß aus der Zuführungsleitung kein Wasser ausströmen kann. Das vor dem Abnehmen in der Siebkammer 5 befindliche Restwasser wird in dem becherartigen Deckel 10 gesammelt und kann ausgegossen werden. Das Rückschlagventil 14 verhindert ein Rückströmen von Wasser aus dem servogesteuerten Ventil. Nach dem Reinigen oder Austauschen des Feinsiebs 11 wird der Dekkel 10 wieder auf das Gehäuse 3 aufgeschraubt und soweit nach oben gedreht, bis über den Ventilstößel 9 die Abhebebewegung des Ventiltellers 7 stattfindet.

Da beim versehentlichen Öffnen des Deckels 12 anstelle des Deckels 10 der Ventilteller 7 nicht schließt und somit ein starker Wasseraustritt stattfinden würde, ist der Deckel 12 aus Sicherheitsgründen mit einem Linksgewinde versehen.

**Patentansprüche**

1. Filtereinrichtung mit Drosselvorrichtung zur Einschaltung in eine Wasserzuführungsleitung zu einer Steuervorrichtung, insbesondere einem servogesteuerten Ventil, das einen mit einer Steuerbohrung versehenen Differentialkolben aufweist, mit einem Gehäuse, das je einen an die Wasserzuführungsleitung anschließbaren Einlaß und Auslaß aufweist, dadurch gekennzeichnet, daß der Innenraum des Gehäuses (3) eine mit dem Einlaß (3.1) verbundene Ventilkammer (4) und eine mit dem Auslaß (3.3) verbundene Siebkammer (5) aufweist und die beiden Kammern (4, 5) über einen Ventilsitz (6) miteinander verbunden sind, dem ein in der Ventilkammer (4) angeordneter Ventilteller (7) gegenüberliegt, der unter der Einwirkung einer in seiner Schließrichtung wirkenden Druckfeder (8) steht und an dem ein Ventilstößel (9) angeordnet ist, der durch den Ventilsitz (6) und die Siebkammer (5) hindurchgeführt ist und sich an der Innenseite eines Deckels (10) abstützt, welcher die Siebkammer (5) an der dem Ventilsitz (6) gegenüberliegenden Seite abschließt und in Schließrichtung des Ventiltellers (7) vom Gehäuse (3) abschraubbar ist derart, daß mindestens bei vollständig abgeschraubtem Deckel (10) der Ventilteller (7) unter dem Einfluß des Flüssigkeitsdruckes und der Druckfeder (8) schließt und mindestens bei vollständig auf das Gehäuse (3) aufgeschraubtem Deckel (10) der Ventilteller (7) über den Ventilstößel (9) in der geöffneten Stellung festgehalten ist und daß in der Siebkammer (5) ein zylindrisches Feinsieb (11) derart angeordnet ist, daß seine eine offene Stirnseite direkt an den Ventilsitz (6) anschließt, während die andere Stirnseite verschlossen ist, so daß es bei geöffnetem Ventilteller (7) radial von innen nach außen durchströmt wird.

2. Filtereinrichtung nach Anspruch 1, dadurch gekennzeichnet, daß sich das Feinsieb (11) mit der vom Ventilsitz (7) abgewandten Stirnseite an der Innenseite des Deckels (10) abstützt,und der koaxial durch das Feinsieb (11) geführte Ventilstößel (9) sich an einem mit dem Feinsieb verbundenen Zwischenstück (11.2) abstützt.

3. Filtereinrichtung nach Anspruch 1 oder 2, dadurch gekennzeichnet, daß der Deckel (10) das Gehäuse (3) an der im Einbauzustand unteren Seite becherartig umfaßt, wobei der Rauminhalt des Bechers (10-10.1) im wesentlichen gleich dem Wasserinhalt der Siebkammer (5) ist.

4. Filtereinrichtung nach einem der Ansprüche 1 bis 3, dadurch gekennzeichnet, daß im Auslaß (3.3) des Gehäuses (3) ein Rückschlagventil (14) angeordnet ist.

5. Filtereinrichtung nach einem der Ansprüche 1 bis 4, dadurch gekennzeichnet, daß im Einlaß (3.1) des Gehäuses (3) ein Vorfilter (13) angeordnet ist.

6. Filtereinrichtung nach einem der Ansprüche 1 bis 5, dadurch gekennzeichnet, daß die Ventilkammer (4) an der dem Ventilsitz (6) gegenüberliegenden Seite durch einen abschraubbaren zweiten Deckel (12) mit Linksgewinde abgeschlossen ist.

7. Filtereinrichtung nach einem der Ansprüche 1 bis 6, dadurch gekennzeichnet, daß der Ventilsitz (6) sich in Durchflußrichtung nach innen konisch verengend ausgebildet ist und der Ventilteller (7) eine entsprechend konisch ausgebildete Dichtungsfläche (7.1) mit einer Umfangsnut (7.2) aufweist, in welcher ein O-Ring (7.3) spielfrei angeordnet ist und der die Siebkammer (5) abschließende Deckel (10) in seinem Schraubgewinde spielfrei geführt ist.

Fig.1

# Fig.2

Fig. 3